# EUROPÄISCHE PATENTANMELDUNG

(11) **EP 3 822 890 A1**
(43) Veröffentlichungstag der Anmeldung: **19.05.2021**
(21) Anmeldenummer: 20205608.1
(22) Anmeldetag: 04.11.2020
(51) Int. Cl.: G06Q 10/08, G07F 17/12

(54) **STÜCKGUTSCHRANK UMFASSEND EINE MEHRZAHL VON STÜCKGUTMODULEN SOWIE VERFAHREN ZUM BETRIEB EINES SOLCHEN STÜCKGUTSCHRANKS**

(30) Priorität: 12.11.2019 DE 102019130512
(71) Anmelder: Deutsche Post AG, 53113 Bonn (DE)
(72) Erfinder: Radetzki, Uwe, 53237 Bonn (DE)
(74) Vertreter: Cohausz & Florack

(57) **Zusammenfassung**

Beschrieben und dargestellt ist ein Stückgutschrank (1) umfassend eine Mehrzahl von Stückgutmodulen (2), wobei jedes Stückgutmodul (2) eine Mehrzahl von Stückgutfächern (3) aufweist, wobei jedem Stückgutfach (3) eine von einer das jeweilige Stückgutfach (3) verschließende, eine Entnahme eines Stückguts (5) aus dem Stückgutfach (3) verhindernde Verschlussstellung in eine das Stückgutfach (3) für das Entnehmen und/oder Einlegen eines Stückguts (5) freigebende Öffnungsstellung und wieder zurück verstellbare Verschlusseinheit (4) zugeordnet ist, wobei wenigstens einzelne Stückgutmodule (2) innerhalb des Stückgutschranks (1) zwischen wenigstens zwei Modulpositionen wenigstens im Wesentlichen in vertikaler Richtung und/oder wenigstens im Wesentlichen in wenigstens einer horizontalen Richtung verstellbar angeordnet sind. Damit das Verstellen von Stückgutmodulen entsprechender Stückgutschränke weiter vereinfacht werden kann, ist vorgesehen, dass wenigstens einzelne der verstellbaren Stückgutmodule (2) mit zum Verstellen der Stückgutmodule (2) im Stückgutschrank (1) ausgebildeten Movereinheiten (15) des Stückgutschranks (1) verbunden sind.

## Beschreibung

Die Erfindung betrifft einen Stückgutschrank umfassend eine Mehrzahl von Stückgutmodulen, wobei jedes Stückgutmodul eine Mehrzahl von Stückgutfächern aufweist, wobei jedem Stückgutfach eine von einer das jeweilige Stückgutfach verschließende, eine Entnahme eines Stückguts aus dem Stückgutfach verhindernde Verschlussstellung in eine das Stückgutfach für das Entnehmen und/oder Einlegen eines Stückguts freigebende Öffnungsstellung und wieder zurück verstellbare Verschlusseinheit zugeordnet ist, wobei wenigstens einzelne Stückgutmodule innerhalb des Stückgutschranks zwischen wenigstens zwei Modulpositionen wenigstens im Wesentlichen in vertikaler Richtung und/oder wenigstens im Wesentlichen in wenigstens einer horizontalen Richtung verstellbar angeordnet sind. Ferner betrifft die Erfindung ein Verfahren zum Betrieb eines solchen Stückgutschranks.

Stückgutschränke sind in unterschiedlichen Ausgestaltungen bekannt. In den Stückgutschränken können Stückgüter in separaten Stückgutfächern aufbewahrt werden. Dazu weisen die Stückgutfächer typischerweise Verschlusseinheiten in Form von Türen oder Klappen auf, die zwischen einer Verschlussstellung und einer Öffnungsstellung verstellt werden können. In der Verschlussstellung kann sichergestellt werden, dass unbefugte Personen keinen Zugriff auf ein Stückgut im Stückgutfach erlangen. In der Öffnungsstellung können berechtigte Personen dagegen Stückgüter in den Stückgutschrank einlegen oder aus dem Stückgutschrank entnehmen.

Um die Bedienung des Stückgutschranks durch berechtigte Personen sicherzustellen, kann der Stückgutschrank dazu ausgebildet sein, dass sich Personen für bestimmte Handlungen authentifizieren. So können die berechtigten Personen beispielsweise einen Schlüssel, eine ID-Karte, einen Benutzernamen und/oder einen Code besitzen, um sich zu authentifizieren. Andere Arten der Zugangskontrolle sind jedoch denkbar. Es ist auch denkbar, dass keine gesonderte Zugangskontrolle am Stückgutschrank erfolgt, beispielsweise deshalb, weil der Stückgutschrank bereits in einem zugangsbeschränken Bereich aufgestellt ist, zu dem nur bestimmte Personen überhaupt Zugang bekommen.

Stückgutschränke der bekannten Art weisen auch einzelne Stückgutmodule auf, die jeweils wenigstens ein Stückgutfach umfassen. Anders ausgedrückt können die Stückgutfächer des Stückgutschranks jeweils einem der Stückgutmodule zugeordnet sein. Die Unterteilung des Stückgutschranks in mehrere Stückgutmodule kann dazu dienen, die Stückgutmodule und damit die zugehörigen Stückgutfächer innerhalb des Stückgutschranks zu verstellen. Die Stückgutmodule können dementsprechend innerhalb des Stückgutschranks zwischen wenigstens zwei Modulpositionen verstellt werden, dieses Verstellen erfolgt dabei wahlweise in einer wenigstens im Wesentlichen vertikalen oder in einer wenigstens im Wesentlichen horizontalen Richtung.

Bei den Stückgutschränken der genannten Art handelt es sich bevorzugt, aber eben nicht zwingend um sogenannte Packstationen oder dergleichen, in die Stückgüter, etwa in Form von Sendungen und/oder Paketen eingelegt werden, damit sie später von einer dafür berechtigten Person abgeholt werden können. Im Falle von Stückgütern kann die berechtigte Person ein Kunde oder ein Besteller des Stückguts sein. Im Falle von Paketen kann das der Adressat des Pakets sein. Es sind jedoch auch andere Stückgutschränke und/oder andere Nutzungen der Stückgutschränke denkbar.

Um die Stückgutmodule bekannter Stückgutschränke zu verstellen, ist jedoch ein erheblicher apparativer Aufwand und/oder Bedienaufwand erforderlich. Mithin besteht also das Bestreben, hier weitere Verbesserungen zu erreichen.

Daher liegt der vorliegenden Erfindung die Aufgabe zugrunde, den Stückgutschrank und das Verfahren jeweils der eingangs genannten und zuvor näher beschriebenen Art derart auszugestalten und weiterzubilden, dass das Verstellen von Stückgutmodulen entsprechender Stückgutschränke weiter vereinfacht werden kann.

Diese Aufgabe ist bei einem Stückgutschrank nach dem Oberbegriff von Anspruch 1 dadurch gelöst, dass wenigstens einzelne der verstellbaren Stückgutmodule mit zum Verstellen der Stückgutmodule im Stückgutschrank ausgebildeten Movereinheiten des Stückgutschranks verbunden sind.

Die genannte Aufgabe ist ferner gemäß Anspruch 9 gelöst durch ein Verfahren zum Betrieb eines Stückgutschranks nach einem der Ansprüche 1 bis 11,
- bei dem die Verschlusseinheit wenigstens eines Stückgutfachs eines Stückgutmoduls geöffnet wird,
- bei dem ein Stückgut entweder aus dem geöffneten Stückgutfach entnommen oder in das geöffnete Stückgutfach eingelegt wird,
- bei dem die Verschlusseinheit des wenigstens einen Stückgutfachs nach dem Einlegen wieder verschlossen wird und
- bei dem nach dem Verschließen des Stückgutfachs wenigstens einzelne Stückgutmodule mittels mit den entsprechenden Stückgutmodulen verbundenen Movereinheiten innerhalb des Stückgutschranks zwischen wenigstens zwei Modulpositionen in wenigstens im Wesentlichen vertikaler und/oder in wenigstens im Wesentlichen horizontaler Richtung im Stückgutschrank verstellt werden.

Um das Verstellen der Stückgutmodule einfacher realisieren zu können, sind wenigstens einzelne Stückgutmodule mit Movereinheiten verbunden, die das Verstellen der Stückgutmodule im Stückgutschrank bewerkstelligen können. Dabei besteht die Verbindung insbesondere während des Verstellens der einzelnen Stückgutmodule, kann aber auch darüber hinaus bestehen. Dabei erlauben die Movereinheiten das Verstellen der Stückgutmodule in wenigstens einer wenigstens im Wesentlichen vertikalen und/oder in wenigstens einer wenigstens im Wesentlichen horizontalen Richtung.

Auf die entsprechende Weise wird die Funktion des Verstellens der Stückgutmodule in den Movereinheiten konzentriert. Die Stückgutmodule selbst müssen daher nicht auch die Funktion des Verstellens übernehmen, was insgesamt zu einer Vereinfachung des Gesamtsystems und auch dessen Handhabung führt.

Der besseren Verständlichkeit halber werden nachfolgend der Stückgutschrank und das Verfahren zu seinem Betrieb gemeinsam beschrieben, ohne dass immer jeweils im Einzelnen zwischen dem Stückgutschrank und dem Verfahren unterschieden wird. Für den Fachmann ist jedoch aufgrund des Kontextes ersichtlich, welches Merkmal jeweils in Bezug auf den Stückgutschrank und in Bezug auf das Verfahren besonders bevorzugt ist.

Bei einer ersten besonders bevorzugten Ausgestaltung des Stückgutschranks sind die Movereinheiten lösbar und wiederverbindbar mit den einzelnen Stückgutmodulen ausgebildet. Dies ermöglicht es den Stückgutmodulen, ausgetauscht zu werden. Die Stückgutmodule eines Stückgutschranks bleiben also nicht zwingend dauerhaft dem entsprechenden Stückgutschrank zugeordnet, sondern können vielmehr bedarfsweise gegen andere gleichartige Stückgutmodule ausgetauscht werden. Diese Gleichartigkeit kann sich dabei beispielsweise auf die Verbindbarkeit mit den Movereinheiten und/oder auf die räumlichen Abmessungen beziehen, so dass die Stückgutmodule überhaupt sinnvoll in den Stückgutschrank passen und darin aufgenommen werden können. Vor diesem Hintergrund ist es daher besonders bevorzugt, wenn die einzelnen Stückgutmodule des Stückgutschranks durch gleichartige Stückgutmodule austauschbar sind.

Alternativ oder zusätzlich zu einem Austausch einzelner Stückgutmodule müssen die Movereinheiten so nicht dauerhaft mit den entsprechenden Stückgutmodulen verbunden bleiben, und zwar insbesondere dann nicht, wenn die Stückgutmodule nicht im Stückgutschrank verstellt werden. Die Movereinheiten können vielmehr zum Verstellen unterschiedlicher Stückgutmodule nacheinander eingesetzt werden, so dass eine geringere Anzahl an Movereinheiten erforderlich ist, um die einzelnen Stückgutmodule im Stückgutschrank zu verstellen. Nachdem ein Stückgutmodul verstellt worden ist, können die Movereinheiten dieses Stückgutmoduls mit einem anderen Stückgutmodul verbunden werden, um anschließend dieses Stückgutmodul zu verstellen.

Eine weitere Vereinfachung und zudem eine höhere Zuverlässigkeit lässt sich erreichen, wenn ein Schienensystem zum geführten Verstellen der wenigstens einzelnen Stückgutmodule vorgesehen ist. Durch das Schienensystem werden beispielsweise die Verstellwege für die Stückgutmodule vorgegeben. Außerdem kann das Verstellen der Stückgutmodule gleichmäßiger, schonender und reproduzierbarer erfolgen als ohne das Schienensystem. Dabei bietet es sich der Einfachheit halber in besonderem Maße an, wenn die Movereinheiten an dem Schienensystem geführt sind. Das Schienensystem dient daher dem Führen der Stückgutmodule während dem Verstellen der Stückgutmodule über die geführte Bewegung der Movereinheiten entlang des Schienensystems.

Um ein zweckmäßiges Verschieben zum Ausnutzen des Stückgutschranks zu erreichen, kann das Schienensystem wenigstens im Wesentlichen vertikale Schienenabschnitte und wenigstens im Wesentlichen horizontale Schienenabschnitte aufweisen. Dabei wird die Flexibilität des Schienensystems und dessen Nutzbarkeit gesteigert, wenn die vertikalen und die horizontalen Schienenabschnitte wenigstens teilweise einander kreuzen.

Besonders zweckmäßig ist es zudem, wenn das Schienensystem wenigstens im Wesentlichen rechtwinklig zueinander verlaufende horizontale Schienenabschnitte zum geführten Verstellen der wenigstens einzelnen Stückgutmodule aufweist. Dann können Stückgütermodule nicht nur im Stückgutschrank zur Seite verstellt, sondern auch nach vorne und hinten verschoben werden. Dies eröffnet nicht nur eine gesteigerte Flexibilität, sondern erleichtert auch das Abgeben und Aufnehmen von Stückgutmodulen, die bedarfsweise gegeneinander ausgetauscht werden. Um bedarfsweises Movereinheiten zuverlässiger und zweckmäßiger zwischen zwei zueinander wenigstens im Wesentlichen rechtwinkligen Schienenstücken des Schienensystems hin und her bewegen zu können, kann es sich anbieten, wenn die entsprechenden Schienenstücke im gemeinsamen Verbindungsbereich eine gewisse Krümmung oder Rundung aufweisen. So kann bedarfsweise auch ein versehentliches Blockieren von Movereinheiten beim Übergang von einem Schienenstück auf ein angrenzendes, wenigstens im Wesentlichen rechtwinklig zu dem ersten Schienenstück ausgerichtetes Schienenstück vermieden werden. Eine Krümmung oder Rundung im Verbindungsbereich zwischen wenigstens zwei Schienenstücken kann sich ebenso zwischen zwei wenigstens im Wesentlichen horizontalen und wenigstens im Wesentlichen rechtwinkligen Schienenstücken wie zwischen einem wenigstens im Wesentlichen vertikalen Schienenstück und einem wenigstens im Wesentlichen horizontalen Schienenstück anbieten.

Besonders zweckmäßig lässt sich der Stückgutschrank einsetzen und betreiben, wenn die Movereinheiten selbstständig entlang des Schienensystems verfahrbar angeordnet sind. Die Movereinheiten müssen also nicht direkt von einem Benutzer bedient werden. Die Movereinheiten können vielmehr, insbesondere jede Movereinheit für sich, durch eine geeignete Steuerung eigenständig im Stückgutschrank verfahren werden. Dabei erlaubt die Verstellbarkeit bedarfsweise ein synchrones Verstellen einer Mehrzahl von Movereinheiten entlang des Schienensystems und/oder bedarfsweise das Verfahren wenigstens einzelner Movereinheiten unabhängig voneinander entlang des Schienensystems. So lassen sich die Movereinheiten sehr vielfältig und besonders zweckmäßig einsetzen.

Damit zeitweise nicht genutzte Movereinheiten das Verstellen von Stückgutmodulen durch das Verfahren von anderen Movereinheiten nicht beeinträchtigen, kann im Schienensystem wenigstens ein Parkbereich für momentan nicht genutzte Movereinheiten vorgesehen sein. Aus diesem Parkbereich können die Movereinheiten dann beispielsweise ganz gezielt zu einem Stückgutmodul verfahren werden, das im Stückgutschrank als nächstes verstellt werden soll. Nach diesem Verstellen können die Movereinhieten dann wieder in den Parkbereich im Schienensystem zurückkehren.

Wenn die Movereinheiten eine Verbindungseinheit zum lösbaren Verbinden mit wenigstens einem Stückgutmodul aufweisen, können die Movereinheiten leicht und zuverlässig mit den jeweils gewünschten, weil etwa zu verstellenden Stückgutmodulen, verbunden werden. Wenn anschließend andere Stückgutmodule verstellt werden sollen, können dieselben Movereinheiten problemlos von den Stückgutmodulen getrennt und wieder mit den dann zu verstellenden Stückgutmodulen verbunden werden. Eine Verfahreinheit der Movereinheiten kann dagegen zum gezielten Verfahren der Movereinheiten entlang des Schienensystems dienlich sein. Um dies Verfahren zu bewerkstelligen, kann zudem eine Antriebseinheit vorgesehen sein, die die Verfahreinheit antreibt. Um eine gesteuertes und damit gezieltes Verfahren der Movereinheiten zu erreichen, können diese alternativ oder zusätzlich eine Steuereinheit zum Steuern der Movereinheiten aufweisen. Damit die Movereinheiten abgestimmt untereinander verfahren werden können, ist es bedarfsweise zweckmäßig, wenn eine Kommunikationseinheit zur Kommunikation zwischen der Movereinheit und einem Steuermodul des Stückgutschranks, zur Kommunikation zwischen der Movereinheit und einer Steuereinheit des Stückgutmoduls und/oder zur Kommunikation zwischen der Movereinheit und Steuereinheiten weiterer Movereinheiten vorgesehen ist.

Ein zweckmäßiges Verfahren der Movereinheiten lässt sich bevorzugt beispielsweise dadurch realisieren, dass die Verfahreinheit zum Antrieb der Movereinheiten einen Läufer aufweist. Der Läufer dient dann dem Verfahren der Movereinheit entlang eines dem Schienensystem zugeordneten Stators. Somit bilden dann der Läufer und der Stator einen Linearmotor, so dass ein elektromagnetischer Antrieb der Movereinheiten bereitgestellt werden kann. Alternativ oder zusätzlich kann zum Verfahren der Movereinheiten diesen auch wenigstens ein Antriebsrad zugeordnete sein, mit dem die Movereinheiten dann entlang des Schienensystems abrollen. Um die Movereinheiten problemlos in unterschiedliche Richtungen verfahren bzw. die Verfahrrichtungen problemlos wechseln zu können, kann es sich insbesondere anbieten, wenn das wenigstens eine Antriebsrad als omnidirektionales Rad ausgebildet ist.

Damit die Stückgutmodule nicht dauerhaft von den Movereinheiten im Stückgutschrank gehalten werden müssen, so dass beispielsweise die Movereinheiten anderweitig eingesetzt werden können, während ein Stückgutmodul an seinem Platz verharrt, können Arretiereinrichtungen zum stationären Arretieren von Stückgutmodulen in vorbestimmten Positionen im Stückgutschrank vorgesehen sein. Die Arretiereinrichtungen übernehmen dann bevorzugt das stationäre Halten der Stückgutmodule, während die Movereinheiten die Stückgutmodule insbesondere halten, während die Stückgutmodule von den Movereinheiten verstellt werden. Dabei ist es besonders zweckmäßig, wenn die Movereinheiten von den durch die Arretiereinrichtungen stationär arretierten Stückgutmodulen gelöst und mit diesen auch wieder verbunden werden können.

Die Stückgutmodule können sehr zweckmäßig und effektiv genutzt werden, wenn Stückgutfächern jeweils ein Boden zum Halten eines Stückguts im jeweiligen Stückgutfach zugeordnet ist und wenigstens einzelne Böden zwischen einer Haltestellung zum Halten eines Stückguts in eine Weitergabestellung zum Weitergeben des Stückguts in das darunterliegende Stückgutfach verstellbar vorgesehen sind. Dann kann ein Stückgut eines Stückgutfachs durch Öffnen des zugehörigen Bodens an ein darunter angeordnetes Stückgutfach weitergegeben werden. So wird beispielsweise ein Stückgutmodul geleert, so dass es durch ein mit weiteren Stückgütern gefülltes Stückgutmodul ausgetauscht werden kann. Es kann aber auch ein Stückgutmodul dadurch gefüllt werden, so dass beim Entfernen eines Stückgutmoduls von dem Stückgutmodul mehr Stückgüter mitgenommen werden. So kann insbesondere das Austauschen von Stückgutmodulen besonders effizient ausgestaltet werden.

Bei einer ersten besonders bevorzugten Ausgestaltung des Verfahrens werden einzelne Movereinheiten mit den einzelnen Stückgutmodulen verbunden und zu einem späteren Zeitpunkt wieder von den einzelnen Stückgutmodulen getrennt. Dies erfolgt dann beispielsweise abhängig davon, ob die Stückgutmodule verstellt werden sollen oder nicht. Die Movereinheiten können dann immer dort eingesetzt werden, wo ein Stückgutmodul verstellt werden soll, was den Einsatz der Movereinheiten effektiver macht und die benötigte Anzahl von Movereinheiten beschränken kann. Außerdem können auf die beschriebene Weise einzelne Stückgutmodule des Stückgutschranks gegen geleichartige Stückgutmodule ausgetauscht werden, ohne dass auch die Movereinheiten ausgetauscht werden müssen. Das Austauschen wird damit einfacher und es bedarf hierzu auch weniger Movereinheiten.

Die Stückgutmodule können sehr zuverlässig und einfach verstellt werden, wenn dies derart erfolgt, dass wenigstens die einzelnen Movereinheiten zum Verstellen des einzelnen Stückgutmoduls entlang eines Schienensystems verstellt bzw. verfahren werden. Dabei werden die Movereinheiten und dementsprechend auch die zugehörigen Movereinheiten an dem Schienensystem geführt verfahren bzw. verstellt. Um eine flexible und in hohen Maße nutzbringende Verstellung der Stückgutmodule erreichen zu können, kann es sich anbieten, wenn die Movereinheiten bedarfsweise an vertikalen Schienenabschnitten und an horizontalen Schienenabschnitten geführt verstellt werden. So können die Stückgutmodule in dem Stückgutschrank in unterschiedlichen Raumrichtungen verstellt werden. Für ein flexibles und einfaches Verstellen ist es dabei besonders bevorzugt, wenn sich die vertikalen Schienenabschnitte mit den horizontalen Schienenabschnitten wenigstens abschnittsweise und/oder wenigstens teilweise kreuzen.

Damit einzelne Stückgutmodule in gewünschter Weise und zudem einfach von mehreren Movereinheiten verstellt werden können, bietet es sich an, wenn die Movereinheiten selbstständig entlang des Schienensystems verfahren werden können. Es bedarf dann vorzugsweise lediglich entsprechender Steuerbefehle, die die Movereinheiten dazu bewegen, in einer gewünschten Weise verfahren zu werden. Für die Verstellung der Stückgutmodule ist es dabei bevorzugt, wenn sich die Movereinheiten wenigstens teilweise synchron und/oder wenigstens teilweise unabhängig voneinander, entlang des Schienensystems verfahren lassen. Die Movereinheiten können dann unabhängig von anderen Movereinheiten an einen bestimmten Ort im Stückgutschrank verfahren werden. Andererseits können mehrere Movereinheiten abgestimmt aufeinander einzelne Stückgutmodule verstellen. Sollten einzelne Movereinheiten nicht benötigt werden, können diese bedarfsweise in einen Parkbereich des Schienensystems verstellt werden, und zwar insbesondere so lange, bis die Movereinheiten wieder benötigt werden. Im Parkbereich angeordnet stören die Movereinheiten beispielsweise nicht das Verstellen anderer Movereinheiten und/oder bestimmter Stückgutmodule.

Wenn sich wenigstens einzelne Movereinheiten über Verbindungseinheiten der Movereinheiten lösbar mit wenigstens einem Stückgutmodul verbinden lassen, lassen sich zeitlich aufeinanderfolgende, unterschiedliche Kombination von Stückgutmodulen und Movereinheiten problemlos realisieren. Dagegen können die Movereinheiten und damit die Stückgutmodule zweckmäßig über Verfahreinheiten der Movereinheiten entlang des Schienensystems verfahren bzw. verstellt werden. Dabei lassen sich die Movereinheiten zudem gezielt und effektiv über Antriebseinheiten der Movereinheiten zum Verfahren antreiben. Über Steuereinheiten der Movereinheiten können die Movereinheiten sehr individuell zum Verfahren angesteuert werden. Damit das Verfahren einzelner Movereinheiten mit anderen Movereinheiten und/oder mit anderen Stückgutmodulen abgestimmt ist, können die Movereinheiten über Kommunikationseinheiten der Movereinheiten bedarfsweise mit einem Steuermodul des Stückgutschrank, mit einer Steuereinheit des Stückgutmoduls und/oder mit einer Steuereinheit weiterer Movereinheiten kommunizieren.

Die Movereinheiten können einfach und genau mittels eines Läufers entlang des Schienensystems verfahren werden, wenn dem Schienensystem ein Stator zugeordnet ist. Der Läufer der Movereinheiten und der Stator des Schienensystems können dann nämlich zusammen einen Linearmotor zum Verfahren der Stückgutmodule bilden, so dass ein elektromagnetischer Antrieb der Movereinheiten bereitgestellt werden kann. Alternativ oder zusätzlich können die Movereinheiten mit wenigstens einem entlang des Schienensystems abrollenden Antriebsrad angetrieben entlang des Schienensystems verfahren werden, um auf diesem Wege die Stückgutmodule zu verstellen. Damit die Stückgutmodule sehr flexibel verstellt werden können, ist das wenigstens eine Antriebsrad weiter vorzugsweise als omnidirektionales Rad ausgebildet.

Für eine Effektive Nutzung der einzelnen Movereinheiten im Stückgutschrank ist es zweckmäßig, wenn einzelne Stückgutmodule von den zugehörigen, einzelnen Movereinheiten an Arretiereinrichtungen übergeben werden können. Dabei werden die Stückgutmodule vorzugsweise von den Arretiereinrichtungen stationär im Stückgutschrank gehalten. Hierzu sind dann bedarfsweise keine weiteren Movereinheiten erforderlich. Um die stationär arretierten Stückgutmodule zu einem späteren Zeitpunkt im Stückgutschrank verfahren zu können, ist es dienlich, wenn einzelne Stückgutmodule durch einzelne Movereinheiten von den Arretiereinrichtungen des Stückgutschranks übernommen und anschließend in den Stückgutschrank verfahren werden können.

Damit die Stückgutmodule sehr effizient genutzt werden können, kann wenigstens ein Stückgut durch wenigstens einen öffenbaren Boden wenigstens eines Stückgutfachs in ein darunter angeordnetes Stückgutfach weitergegeben werden. So kann beispielweise das untere Stückgutmodul gefüllt und das oberer Stückgutmodul geleert werden. Dabei ist die entsprechende Übergabe der Stückgüter nach unten durch den wenigstens einen Boden des wenigstens einen Stückgutfachs bedarfsweise nicht nur zwischen zwei benachbarten Stückgutmodulen, sondern alternativ oder zusätzlich auch zwischen Stückgutfächern eines einzelnen Stückgutmoduls möglich. Werden einzelne Stückgutmodule des Stückgutschranks gegen gleichartige Stückgutmodule ausgetauscht, kann es effektiv sein, wenn das aus dem Stückgutschrank entfernte Stückgutmodul leer ist und alle Stückgüter in anderen Stückgutmodulen zurückbleiben. Dann können die Stückgüter beispielsweise weiter an dem entsprechenden Stückgutschrank abgeholt bzw. entgegengenommen werden. Alternativ oder zusätzlich kann es zweckmäßig sein, wenn das aus dem Stückgutschrank entnommene Stückgutmodul voll ist und mehr leere Stückgutfächer im Stückgutschrank zurückgelassen werden. Dann sind weitere Stückgutfächer im Stückgutschrank vorhanden, in die Stückgüter eingelegt werden können. Damit die Weitergabe von Stückgütern von einem Stückgutfach an ein darunterliegendes Stückgutfach einfach und zuverlässig erfolgen kann, kann ein Boden wenigstens eines Stückgutfachs zwischen einer Haltestellung zum Halten eines Stückguts in eine Weitergabestellung zum Weitergeben des Stückguts in das darunterliegende Stückgutfach geöffnet und, insbesondere, auch wieder geschlossen werden.

Nachfolgend wird die Erfindung anhand einer lediglich ein Ausführungsbeispiel darstellenden Zeichnung näher erläutert. In der Zeichnung zeigt
- Fig. 1A-D: einen erfindungsgemäßen Stückgutschrank in einer schematischen perspektivischen Ansicht,
- Fig. 2: den erfindungsgemäßen Stückgutschrank der Fig. 1 mit entnommenen Stückgutmodulen in einer perspektivischen Ansicht,
- Fig. 3A-B: alternative Details des Stückgutschranks aus Fig. 2 mit einer entlang eines Schienensystems verfahrbaren Movereinheit in einer Schnittansicht und
- Fig. 4A-C: zwei übereinander angeordnete Stückgutfächer eines Stückgutmoduls des Stückgutschranks aus Fig. 1 in einer schematischen Draufsicht.

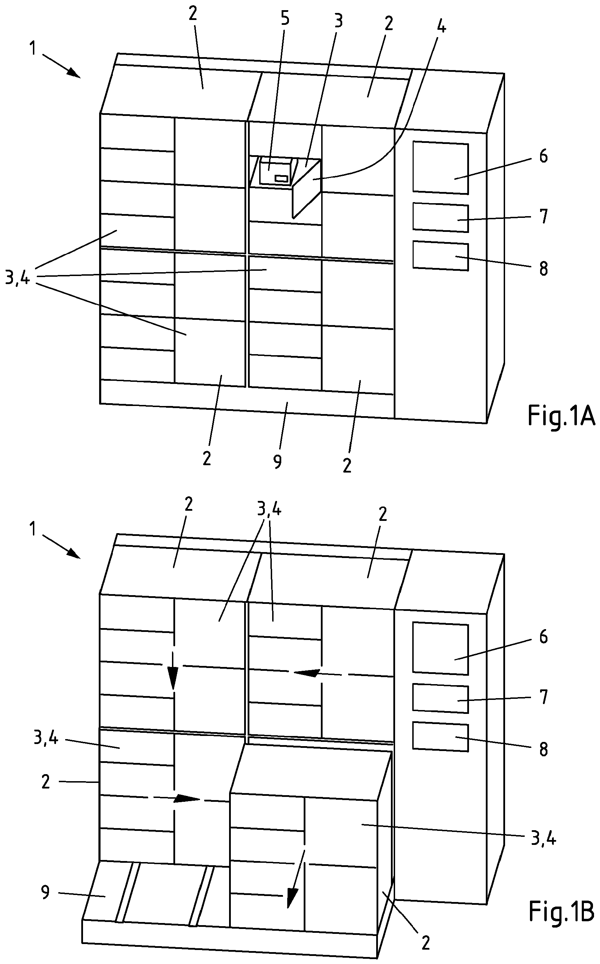

In der Fig. 1A ist ein Stückgutschrank 1 mit vier unterschiedlichen Stückgutmodulen 2 dargestellt, die jeweils mehrere Stückgutfächer 3 aufweisen. Jedes Stückgutfach 3 umfasst eine Verschlusseinheit 4, in Form einer Klappe, die zwischen einer Verschlussstellung in einer Öffnungsstellung und zurück verstellt, insbesondere geschwenkt, werden kann. Bei einem der dargestellten Stückgutfächer 3 ist die Verschlusseinheit 4 in der Öffnungsstellung dargestellt, die ein Einlegen von Stückgütern 5 und/oder ein Entnehmen von Stückgütern 5 ermöglicht. Ein Zugriff auf Stückgüter 5 in den übrigen Stückgutfächern 3 ist durch die Verschlusseinheiten 4 in der Verschlussstellung zuverlässig unterbunden. Neben den Stückgutmodulen 2 ist bei dem dargestellten und insoweit bevorzugten Stückgutschrank 1 noch ein Bedienmodul 6, ein Steuermodul 7 und ein Kommunikationsmodul 8 vorgesehen. Über das Bedienmodul 6 kann eine Authentifizierung einer Person vorgenommen werden. Beispielsweise kann alternativ in Abwesenheit des Bedienmoduls 6 eine Authentifizierung einer Person mittels des Kommunikationsmoduls 8 vorgenommen werden. Zu diesem Zweck kann beispielsweise die entsprechende Person mittels eines Smartphones oder eines anderen externen Gerät, insbesondere Handheld-Gerät, eine Authentifizierungsinformation an das Kommunikationsmodul 8 senden bzw. mit dem Kommunikationsmodul 8 austauschen.

Die Person ist sodann befugt, ein Stückgut 5 in ein Stückgutfach 3 einzulegen und/oder ein Stückgut 5 aus einem Stückgutfach 3 zu entnehmen. Dementsprechend kann das Steuermodul 7 ein bestimmtes Stückgutfach 3 öffnen und speichern, welches Stückgut 5 eingelegt oder entnommen wurde und/oder wer in welches Stückgutfach 3 ein Stückgut 5 eingelegt hat bzw. wer aus einem Stückgutfach 3 ein Stückgut 5 entnommen hat. So wird beispielsweise im Steuermodul 7 festgehalten, welche Stückgutfächer 3 mit Stückgütern 5 belegt und welche Stückgutfächer 3 nicht mit Stückgütern 5 belegt sind.

Bei dem dargestellten Stückgutschrank 1 handelt es sich insbesondere, aber eben nicht zwingend, um eine sogenannte Packstation, in deren Stückgutfächer 3 Stückgüter 5 in Form von Paketen oder andere Sendungen eingelegt werden können.

Dann können die Stückgüter 5 von einem Kurier oder dergleichen zur Abholung durch den Adressat oder eine von ihm beauftragte Person in die Stückgutfächer 3 eingelegt werden. Die zur Abholung berechtigte Person weist vorzugsweise ihre Berechtigung an dem Stückgutschrank 1 oder einer Zugangskontrolle zu dem Stückgutschrank 1 nach. Die Verschlusseinheit 4 des Stückgutfachs 3, in dem das zur Abholung durch die berechtigte Person vorgesehene Stückgut lagert, wird vom Stückgutfach 3 geöffnet oder wenigstens zur Öffnung freigegeben. Alternativ kann aber auch von einer Person ein Stückgut 5 für eine andere Person in ein Stückgutfach 3 eingelegt werden. Das Stückgut 5 wird dann von dem Kurier oder einer vergleichbaren Person aus dem Stückgutfach 3 entnommen, nachdem diese Person ihre entsprechende Berechtigung, wie zuvor beschrieben, nachgewiesen hat. Anschließend verbringt die Person das Stückgut 5 zum Adressaten, einer Verteilstation oder an einen anderen Stückgutschrank 1.

Die Anordnung der Stückgutmodule 2 im Stückgutschrank 1 ist nicht dauerhaft festgelegt, wie dies exemplarisch in der Fig. 1B dargestellt ist. Vielmehr kann die Anordnung der Stückgutmodule 2 verändert werden. Bei dem dargestellten und insoweit bevorzugten Stückgutschrank 1 kann eine unter wenigstens einem der Stückgutmodule 2 befindliche Basis 9 des Stückgutschranks 1 nach vorne ausgefahren werden. Gleichzeitig oder nachträglich kann dann wenigstens ein oberhalb der Basis 9 angeordnetes Stückgutmodul 2 mit nach vorne ausgefahren werden. Beispielsweise dadurch wird Platz geschaffen, um wenigstens einzelne der übrigen Stückgutmodule 2 im Stückgutschrank 1 zu verstellen. Dabei könnte grundsätzlich zur Verstellung der Stückgutmodule 2 im Stückgutschrank 1 auf eine entsprechende Basis 9, jedenfalls eine vor und zurück verstellbare Basis 9 gemäß Fig. 1B verzichtet werden. Die Basis 9 kann jedoch zur Unterstützung eines zuverlässigen Verstellens der Stückgutmodule 2 im Stückgutschrank 1 dienlich sein.

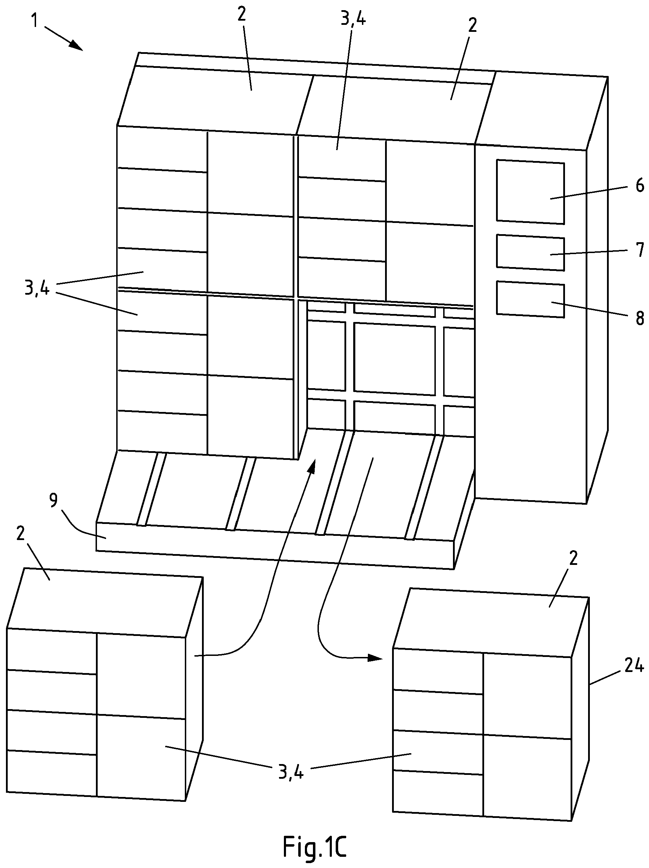

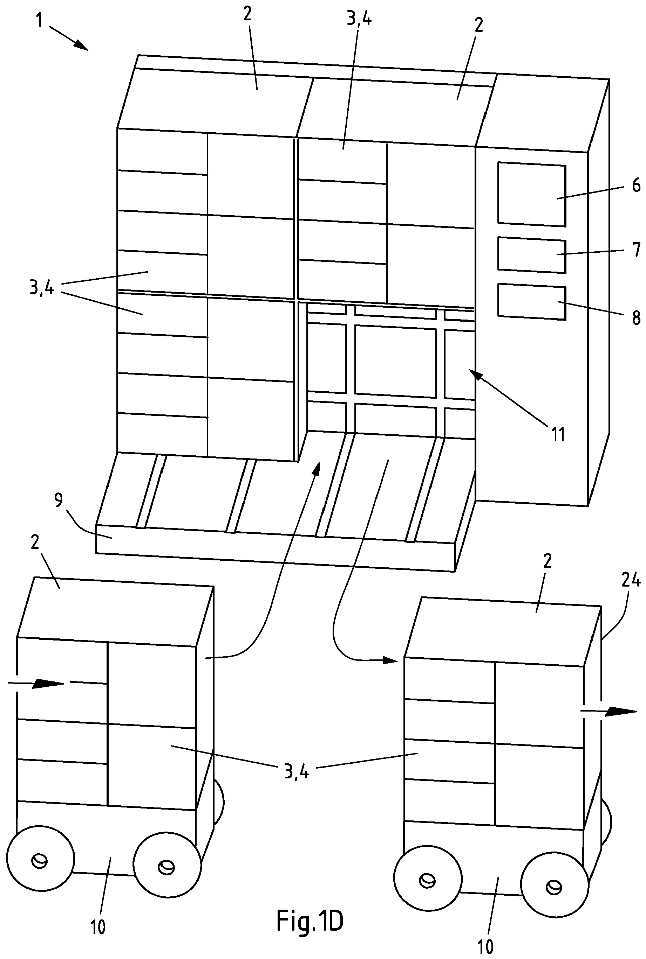

Die Stückgutmodule 2 können in dem dargestellten und insoweit bevorzugten Stückgutschrank 1 nicht nur verstellt werden, sondern auch gegen andere Stückgutmodule 2 ausgetauscht werden, wie dies in der Fig. 1C dargestellt ist. Dabei ist es zweckdienlich, wenn die Stückgutmodule 2 hinsichtlich ihrer Abmessungen und ihrer äußeren Ausgestaltung gleichartig aufgebaut, bedarfsweise auch genormt, sind. Bei dem dargestellten Beispiel wird ein Stückgutmodul 2 von einem autonom fahrenden Fahrzeug 10 übernommen und abtransportiert. Ein anderes Stückgutmodul 2 wird sodann durch dasselbe oder ein anderes autonom fahrendes Fahrzeug 10 angeliefert und an den Stückgutschrank 1 übergeben, wie dies in der Fig. 1D dargestellt ist. Bedarfsweise kann die Basis 9 des Stückgutschranks 1 wieder zurück gefahren werden. Dies erfolgt vorzugsweise aber nicht zwingend zusammen mit der Basis 9.

Vor diesem Hintergrund kann es sich bei dem dargestellten Stückgutschrank 1 um eine Packstation handeln. Es werden dann beispielsweise Stückgutmodule 2 mit Stückgütern 5, etwa in Form von Paketen oder dergleichen, in den Stückgutfächern 3 über Fahrzeuge 10 an den Stückgutschrank 1 angeliefert und an den Stückgutschrank 1 übergeben bzw. von dem Stückgutschrank 1 übernommen. Das Steuermodul 7 erhält zudem eine Information dahingehend, welches Stückgut 5 sich in welchem Stückgutfach 3 befindet. Ein Abholer kann sich nun über das Bedienmodul 6 authentifizieren und es wird durch das Steuermodul 7 die Verschlusseinheit 4 des Stückgutfachs 3 geöffnet, in dem sich das Stückgut 5 befindet, zu dessen Abholung der Abholer authentifiziert ist. Alternativ oder zusätzlich kann eine Person aber auch ein Stückgut 5 in ein Stückgutfach 3 einlegen, dass für eine andere Person, insbesondere an einem andern Ort, bestimmt ist. Über das Bedienmodul 6 und das Steuermodul 7 wird dann die Verschlusseinheit 4 eines leeren Stückgutfachs 3 in die Öffnungsstellung verstellt. In das Stückgutfach 3 legt die entsprechende Person dann das Stückgut 5 ein. Die Verschlusseinheit 4 wird danach wieder in die Verschlussstellung verstellt.

Ist beispielweise ein Stückgutmodul 2 von den entsprechenden Abholern geleert worden, kann das leere Stückgutmodul 2 durch ein mit weiteren zu Abholung an dem entsprechenden Ort vorgesehenen Stückgütern 5 bestücktes anderes Stückgutmodul 2 ersetzt werden. Ist alternativ oder zusätzlich ein Stückgutmodul 2 mit neu eingelegten Stückgütern 5 gefüllt, kann dieses Stückgutmodul 2 an ein Fahrzeug 10 abgegeben und durch ein leeres oder ein mit an dem bestimmten Ort abzuholenden Stückgütern 5 gefülltes Stückgutmodul 2 ausgetauscht werden. Dies kann auf die in den Fig. 1A-D dargestellter Weise erfolgen. Dabei sind autonom fahrende Fahrzeuge 10 zum Transport der Stückgutmodule 2 bevorzugt. Andere Fahrzeuge 10 wären aber ebenfalls denkbar.

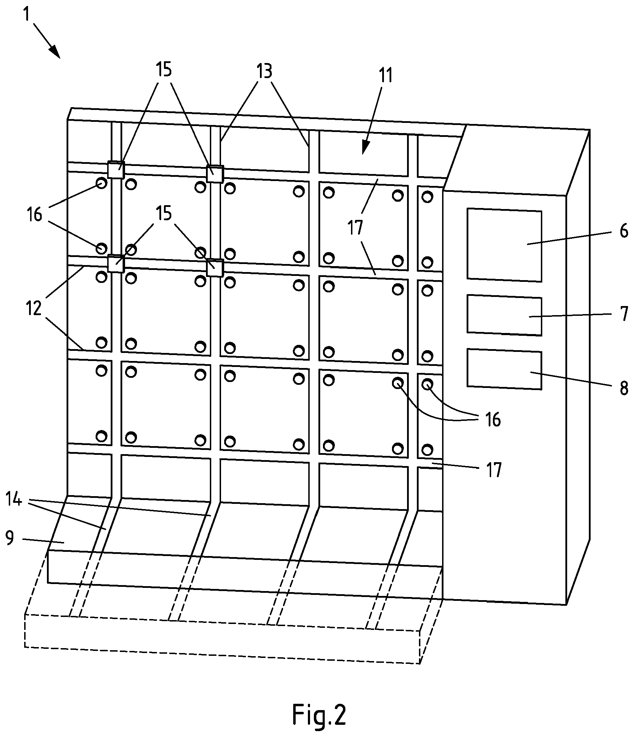

In der Fig. 2 ist der Stückgutschrank 1 ohne die Stückgutmodule 2 dargestellt. Der dargestellte und insoweit bevorzugte Stückgutschrank 1 weist dabei ein Schienensystem 11 zum Verstellen der Stückgutmodule 2 auf, das sowohl vertikale als auch horizontale Schienenabschnitte 12,13,14 umfasst. Die horizontalen Schienenabschnitte 12,14 sind dabei teilweise rechtwinklig zueinander ausgerichtet. Zudem kreuzen sich abschnittsweise und teilweise vertikale Schienenabschnitte 13 und horizontale Schienenabschnitte 12. In dem Schienensystem 11 sind Movereinheiten 15 gehalten, die ihrerseits mit den Stückgutmodulen 2 verbunden werden können. Die Verbindung der Stückgutmodule 2 mit den Movereinheiten 15 und die Verbindung der Movereinheiten 15 mit dem Schienensystem 11 ist dabei derart, dass die Stückgutmodule 2 von den Movereinheiten 15 im Stückgutschrank 1 in Position gehalten werden können. Durch ein Verfahren der mit Stückgutmodulen 2 verbundenen Movereinheiten 15 können die entsprechenden Stückgutmodule 2 im Stückgutschrank 1 verstellt werden. Wenn die Stückgutmodule 2 nicht im Stückgutschrank 1 verstellt bzw. verfahren werden sollen, können die Movereinheiten 15 die Stückgutmodule 2 an stationär im Stückgutschrank 1 vorgesehene Arretiereinrichtungen 16 übergeben werden, die die Stückgutmodule 2 auch ohne die Movereinheiten 15 stationär, insbesondere formschlüssig, im Stückgutschrank 1 halten. Die Arretiereinrichtungen 16 können dabei beispielsweise in Form von Haken ausgebildet sein.

Wenn Stückgutmodule 2 nicht von Movereinheiten 15 im Stückgutschrank 1 gehalten werden, können diese Movereinheiten 15 von den entsprechenden Stückgutmodulen 2 gelöst und ohne die Stückgutmodule 2 entlang des Schienensystems 11 verfahren werden. Die Movereinheiten 15 können so beispielsweise zu anderen Stückgutmodulen 2 verfahren und dort mit den anderen Stückgutmodulen 2 verbunden werden. Anschließend lassen sich die entsprechenden anderen Stückgutmodule 2 mit den dann verbundenen Movereinheiten 15 entlang des Schienensystems 11 verstellen. Etwa für den Fall, dass keines der Stückgutmodule 2 verstellt werden soll oder wenn einzelne Movereinheiten 15 nicht benötigt werden, können diese Movereinheiten 15 in einen Parkbereich 17 des Schienensystems 11 verfahren werden. Dort warten die Movereinheiten 15 dann auf einen erneuten Einsatz zum Verschieben von Stückgutmodulen 2. Dabei sind die Stückgutmodule 2 und die Movereinheiten 15 eines Stückgutschranks 1 in unterschiedlichen Kombinationen verbindbar und wieder lösbar.

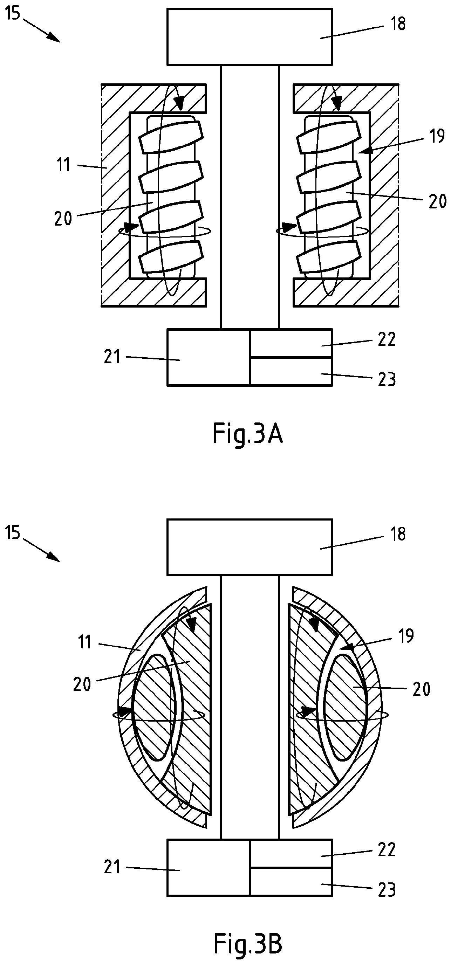

In der Fig. 3A-B sind schematisch alternative an dem Schienensystem 11 geführte Movereinheiten 15 dargestellt. Beiden Movereinheiten 15 gemeinsam sind Verbindungseinheiten 18, zum lösbaren Verbinden der Movereinheiten 15 mit Stückgutmodulen 2 des Stückgutschranks 1. Dabei können die Verbindungseinheiten 18 dazu ausgebildet sein, bedarfsweise in eine Aufnahme der Stückgutmodule 2 einzugreifen und wieder aus den Aufnahmen der Stückgutmodule 2 herausgezogen zu werden. Alternativ können die Movereinheiten 15 Gewindestangen umfassen, die in Gegengewinde in den Stückgutmodulen 2 eingeschraubt werden können. Anschließend lassen sich die Gewindestangen wieder aus den Gegengewinden herausdrehen. Es ist aber auch denkbar, dass alternativ oder zusätzlich zu einer formschlüssigen Verbindung noch eine magnetische, insbesondere elektromagnetische Verbindung zwischen Movereinheiten 15 und Stückgutmodulen 2 etabliert werden kann.

Neben der Verbindungseinheit 18 weisen die Movereinheiten 15 noch Verfahreinheiten 19 auf, die bei den dargestellten und insoweit bevorzugten Movereinheiten 15 in dem Schienensystem 11 aufgenommen sind. Dabei können die Verfahreinheiten 19 abhängig davon ausgebildet sein, wie das Schienensystem 11 ausgebildet ist. Im Falle eines rechteckigen Querschnitts der Schienenabschnitte 12-14 können andere Antriebsräder 20 Verwendung finden als im Falle von Schienenabschnitten 12-14 mit einem kreisförmigen Querschnitt. Die Antriebräder 20 rollen an dem Schienensystem 11 ab, um die Movereinheit 15 anzutreiben und Movereinheit 15 so entlang des Schienensystems 11 zu verstellen. Dabei sind bei den dargestellten und insoweit bevorzugten Movereinheiten 15 omnidirektionale Antriebsräder 20 vorgesehen, um die Movereinheiten 15 in dem Schienensystem 11 in unterschiedliche Richtungen verfahren zu können und damit leicht zwischen unterschiedlich ausgerichteten Schienenabschnitten 12-14 wechseln bzw. hin und her fahren zu können. Die entsprechenden Rotationsrichtungen der omnidirektionalen Antriebsräder 20 sind dabei mittels entsprechender Pfeile veranschaulicht.

Die Verfahreinheit 19 wird über eine Antriebseinheit 21 angetrieben, um die Movereinheiten 15 entlang des Schienensystems 11 zu verfahren. Die Antriebseinheit 21 kann einen Akkumulator umfassen, der bedarfsweise induktiv geladen werden kann, beispielsweise in einem Parkbereich 17 des Schienensystems 11. Bedarfsweise werden die Movereinheiten 15 aber auch über das Schienensystem 11 direkt mit Spannung versorgt.

Gesteuert wird die Bewegung der Movereinheiten 15 über eine Steuereinheit 22. Die Steuereinheit 22 bestimmt dabei, ob die Movereinheit 15 entlang des Schienensystems 11 bewegt wird und in welche Richtung dies erfolgt. Zudem kann auch vorgegeben werden, mit welcher Geschwindigkeit dies erfolgen soll. Da die Steuerung der Movereinheiten 15 von äußeren Gegebenheiten abhängt und die Verstellung von Stückgutmodulen 2 beispielsweise ein synchrones Verfahren von mehreren Movereinheiten 15 erfordert, weisen die dargestellten und insoweit bevorzugten Movereinheiten 15 noch Kommunikationseinheiten 23 auf. Über diese Kommunikationseinheiten 23 können die Steuereinheiten 22 die Vorgabe erhalten, die Movereinheiten 15 anzutreiben. Die Movereinheiten 15 können über die Kommunikationseinheiten 23 bedarfsweise auch andere Movereinheiten 15 veranlassen, entlang des Schienensystems 11 zu verfahren, und zwar insbesondere untereinander abgestimmt bzw. synchronisiert. Letztlich ist es zur Steuerung des Stückgutschranks 1 an sich denkbar, dass die Kommunikationseinheiten 23 der Movereinheiten 15 mit Kommunikationseinheiten 23 anderer Movereinheiten 15 kommunizieren und/oder mit einem Steuermodul 7 des Stückgutschranks 1 und/oder mit einer Steuereinheit 24 wenigstens eines Stückgutmoduls 2 kommunizieren. Insbesondere das Steuermodul 7 des Stückgutschranks 1 kann dabei mit anderen Einrichtungen außerhalb des Stückgutschranks 1 kommunizieren, etwa um den Austausch von Stückgutmodulen 2 des Stückgutschranks 1 durch andere Stückgutmodule 2 zu koordinieren.

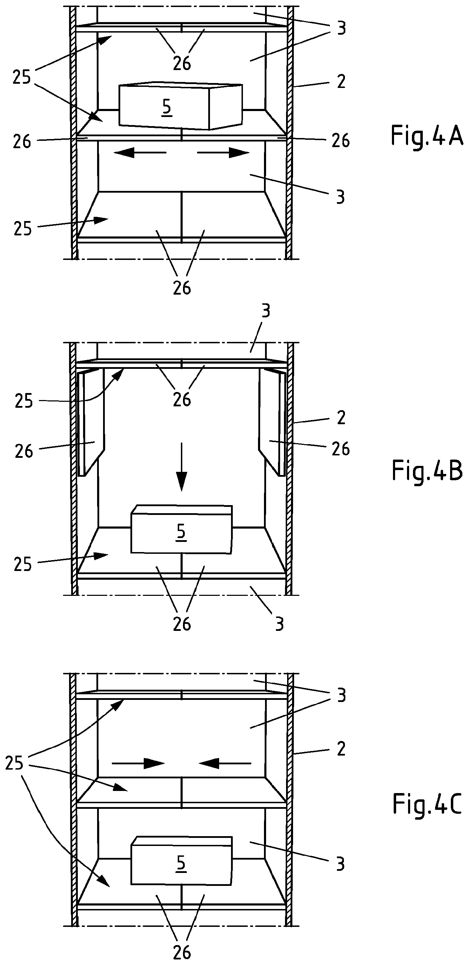

In den Fig. 4A-C sind exemplarisch zwei übereinander angeordnete Stückgutfächer 3 eines Stückgutmoduls 2 des Stückgutschranks 1 aus Fig. 1 in unterschiedlichen Stellungen dargestellt. Es könnte sich analog aber auch um zwei übereinander angeordnete Stückgutfächer 3 zweier übereinander angeordneter Stückgutmodule 2 handeln. Die Funktion der Stückgutfächer 3 wäre dann bedarfsweise analog. Von den beiden in der Fig. 4A dargestellten Stückgutfächern 3 ist in dem oberen Stückgutfach 3 ein Stückgut 5 vorgesehen, das auf dem Boden 25 des Stückgutfachs 3 liegt. Bedarfsweise gesteuert durch das Steuermodul 7 des Stückgutschranks 1 kann der Boden 25 des oberen Stückgutfachs 3 geöffnet werden, wobei der Boden 25 von einer Haltestellung zum Halten des Stückguts 5 im Stückgutfach 3 in eine Weitergabestellung zum Weitergeben des Stückguts 5 in das darunterliegende Stückgutfach 3 verstellt wird. Der Boden 25 wird zu diesem Zweck durch zwei Bodensegmente 26 gebildet, die voneinander weg nach unten schwenken können. Infolgedessen wird das Stückgut 5 aus dem oberen Stückgutfach 3 an das untere Stückgutfach 3 weitergegeben, wie dies in der Fig. 4B dargestellt ist.

Anschließend kann der Boden 25 wieder geschlossen werden, indem die Bodensegmente 26 wieder nach oben geschwenkt werden, wie dies in der Fig. 4C dargestellt ist. Bedarfsweise lässt sich das Stückgut 5 sodann auf die gleiche Weise nach unten an ein weiteres Stückgutfach 3 desselben Stückgutmoduls 2 oder eines anderen, darunter angeordneten Stückgutmoduls 2 weitergeben. Die entsprechenden Böden 25 der Stückgutfächer 3 müssen dabei keine zwei Bodensegmente 26 aufweisen. Die Böden können auch wenigstens teilweise als Schieber, mit Klappen oder in anderer Weise ausgebildet sein, um die entsprechende Funktion der Weitergabe der Stückgüter 5 nach unten bereitzustellen.

### Bezugszeichenliste

- 1: Stückgutschrank
- 2: Stückgutmodul
- 3: Stückfächer
- 4: Verschlusseinheit
- 5: Stückgut
- 6: Bedienmodul
- 7: Steuermodul
- 8: Kommunikationsmodul
- 9: Basis
- 10: Fahrzeug
- 11: Schienensystem
- 12: horizontaler Schienenabschnitt
- 13: vertikaler Schienenabschnitt
- 14: horizontaler Schienenabschnitt
- 15: Movereinheit
- 16: Arretiereinrichtung
- 17: Parkbereich
- 18: Verbindungseinheit
- 19: Verfahreinheit
- 20: Antriebsrad
- 21: Antriebseinheit
- 22: Steuereinheit
- 23: Kommunikationseinheit
- 24: Steuereinheit
- 25: Boden
- 26: Bodensegment

## Patentansprüche

1. Stückgutschrank (1) umfassend eine Mehrzahl von Stückgutmodulen (2), wobei jedes Stückgutmodul (2) eine Mehrzahl von Stückgutfächern (3) aufweist, wobei jedem Stückgutfach (3) eine von einer das jeweilige Stückgutfach (3) verschließende, eine Entnahme eines Stückguts (5) aus dem Stückgutfach (3) verhindernde Verschlussstellung in eine das Stückgutfach (3) für das Entnehmen und/oder Einlegen eines Stückguts (5) freigebende Öffnungsstellung und wieder zurück verstellbare Verschlusseinheit (4) zugeordnet ist, wobei wenigstens einzelne Stückgutmodule (2) innerhalb des Stückgutschranks (1) zwischen wenigstens zwei Modulpositionen wenigstens im Wesentlichen in vertikaler Richtung und/oder wenigstens im Wesentlichen in wenigstens einer horizontalen Richtung verstellbar angeordnet sind,
**dadurch gekennzeichnet, dass**
wenigstens einzelne der verstellbaren Stückgutmodule (2) mit zum Verstellen der Stückgutmodule (2) im Stückgutschrank (1) ausgebildeten Movereinheiten (15) des Stückgutschranks (1) verbunden sind.

2. Stückgutschrank nach Anspruch 1,
**dadurch gekennzeichnet, dass**
die Movereinheiten (15) lösbar und wiederverbindbar mit den einzelnen Stückgutmodulen (2) verbindbar sind und dass, vorzugsweise, die einzelnen Stückgutmodule (2) durch gleichartige Stückgutmodule (2) austauschbar sind.

3. Stückgutschrank nach Anspruch 1 oder 2,
**dadurch gekennzeichnet, dass**
ein Schienensystem (11) zum geführten Verstellen der wenigstens einzelnen Stückgutmodule (2) vorgesehen ist und dass, vorzugsweise, die Movereinheiten (15) an dem Schienensystem (11) geführt sind.

4. Stückgutschrank nach Anspruch 3,
**dadurch gekennzeichnet, dass**
das Schienensystem (11) wenigstens im Wesentlichen vertikale Schienenabschnitte (13) und wenigstens im Wesentlichen horizontale Schienenabschnitte (12,14) aufweist und dass, vorzugsweise, die vertikalen Schienenabschnitte (13) und die horizontalen Schienenabschnitte (12) wenigstens teilweise einander kreuzen.

5. Stückgutschrank nach Anspruch 3 oder 4,
**dadurch gekennzeichnet, dass**
das Schienensystem (11) wenigstens im Wesentlichen rechtwinklig zueinander verlaufende horizontale Schienenabschnitte (12,14) zum geführten Verstellen der wenigstens einzelnen Stückgutmodule (2) aufweist und/oder dass das Schienensystem (11) wenigstens einen Parkbereich (17) für momentan nicht genutzte Movereinheiten (15) aufweist.

6. Stückgutschrank nach einem der Ansprüche 3 bis 5,
**dadurch gekennzeichnet, dass**
die Movereinheiten (15) selbstständig entlang des Schienensystems (11) verfahrbar angeordnet sind und dass, vorzugsweise, wenigstens eine Mehrzahl von Movereinheiten (15) synchron entlang des Schienensystems (11) verfahrbar sind und/oder wenigstens einzelne Movereinheiten (15) unabhängig voneinander entlang des Schienensystems (11) verfahrbar sind.

7. Stückgutschrank nach einem der Ansprüche 1 bis 6,
**dadurch gekennzeichnet, dass**
die Movereinheiten (15) eine Verbindungseinheit (18) zum lösbaren Verbinden mit wenigstens einem Stückgutmodul (2) eine Verfahreinheit (19) zum Verfahren der Movereinheiten (15) entlang des Schienensystems (11), eine Antriebseinheit (21) zum Antrieb der Verfahreinheit (19), eine Steuereinheit (22) zum Steuern der Movereinheiten (15) und/oder eine Kommunikationseinheit (23) zur Kommunikation zwischen der Movereinheit (15) und einem Steuermodul (7) des Stückgutschranks (1), einer Steuereinheit (24) des Stückgutmoduls (2) und/oder Steuereinheiten (22) weiterer Movereinheiten (15) aufweisen und dass, vorzugsweise, die Verfahreinheit (19) zum Antrieb der Movereinheiten (15) einen Läufer zum Verfahren entlang eines dem Schienensystem (11) zugeordneten Stators eines Linearmotors und/oder wenigstens ein, insbesondere als omnidirektionales Rad ausgebildetes, Antriebsrad (20) zum Abrollen entlang des Schienensystems (11) aufweisen.

8. Stückgutschrank nach einem der Ansprüche 1 bis 7,
**dadurch gekennzeichnet, dass** Arretiereinrichtungen (16) zum stationären Arretieren von Stückgutmodulen (2) in vorbestimmten Positionen im Stückgutschrank (1) vorgesehen sind und, vorzugsweise, die Movereinheiten (15) von den durch die Arretiereinrichtungen (16) stationär arretierten Stückgutmodulen (2) lösbar und wieder verbindbar ausgebildet sind und/oder dass den Stückgutfächern (3) jeweils ein Boden (25) zum Halten eines Stückguts (5) im jeweiligen Stückgutfach (3) zugeordnet ist und wenigstens einzelne Böden (25) zwischen einer Haltestellung zum Halten eines Stückguts (5) in eine Weitergabestellung zum Weitergeben des Stückguts (5) in das darunterliegende Stückgutfach (3) verstellbar vorgesehen sind.

9. Verfahren zum Betrieb eines Stückgutschranks (1) nach einem der Ansprüche 1 bis 8,
- bei dem die Verschlusseinheit (4) wenigstens eines Stückgutfachs (3) eines Stückgutmoduls (2) geöffnet wird,
- bei dem ein Stückgut (5) entweder aus dem geöffneten Stückgutfach (3) entnommen oder in das geöffnete Stückgutfach (3) eingelegt wird,
- bei dem die Verschlusseinheit (4) des wenigstens einen Stückgutfachs (3) nach dem Einlegen wieder verschlossen wird und
- bei dem nach dem Verschließen des Stückgutfachs (3) wenigstens einzelne Stückgutmodule (2) mittels mit den entsprechenden Stückgutmodulen (2) verbundenen Movereinheiten (15) innerhalb des Stückgutschranks (1) zwischen wenigstens zwei Modulpositionen in wenigstens im Wesentlichen vertikaler und/oder in wenigstens im Wesentlichen horizontalen Richtung im Stückgutschrank (1) verstellt werden.

10. Verfahren nach Anspruch 19,
- bei dem einzelne Movereinheiten (15) mit den einzelnen Stückgutmodulen (2) verbunden und wieder getrennt werden und
- bei dem, vorzugsweise, die einzelnen Stückgutmodule (2), insbesondere ohne Movereinheiten (15), ausgetauscht werden.

11. Verfahren nach Anspruch 9 oder 10,
- bei dem wenigstens die einzelnen Movereinheiten (15) zum Verstellen des einzelnen Stückgutmoduls (2) entlang eines Schienensystems (11) verstellt und dabei an dem Schienensystem (11) geführt werden und
- bei dem, vorzugsweise, die Movereinheiten (15) an vertikalen Schienenabschnitten (13) und, insbesondere sich mit den vertikalen Schienenabschnitten (13) kreuzenden, horizontalen Schienenabschnitten (12,14) verstellt und geführt werden.

12. Verfahren nach einem der Ansprüche 9 bis 11,
- bei dem die Movereinheiten (15) selbstständig, vorzugsweise wenigstens teilweise synchron und/oder wenigstens teilweise unabhängig voneinander, entlang des Schienensystems (11) verfahren werden und, vorzugsweise, nicht genutzte Movereinheiten (15) in einen Parkbereich (17) des Schienensystems (11) verstellt werden
- bei dem wenigstens einzelne Movereinheiten (15) über Verbindungseinheiten (18) der Movereinheiten (15) lösbar mit wenigstens einem Stückgutmodul (2) verbunden werden, über Verfahreinheiten (19) der Movereinheiten (15) entlang des Schienensystems (11) verfahren werden, über Antriebseinheiten (21) der Movereinheiten (15) zum Verfahren angetrieben werden, über Steuereinheiten (22) der Movereinheiten (15) zum Verfahren gesteuert werden und/oder über Kommunikationseinheiten (23) der Movereinheiten (15) mit einem Steuermodul (7) des Stückgutschranks (1), eines Steuereinheit (24) des Stückgutmoduls (2) und/oder Steuereinheiten (22) weiterer Movereinheiten (15) kommuniziert.

13. Verfahren nach Anspruch 12,
- bei dem die Movereinheiten (15) mittels eines Läufers entlang des dem Schienensystem (11) zugeordneten Stators eines Linearmotors und/oder
- bei dem die Movereinheiten (15) mit wenigstens einem entlang des Schienensystems (11) abrollenden, vorzugsweise als omnidirektionales Rad ausgebildetes, Antriebsrad (20) entlang des Schienensystems (11) verfahren werden.

14. Verfahren nach einem der Ansprüche 19 bis 13,
- bei dem einzelne Stückgutmodule (2) von den einzelnen Movereinheiten (15) an Arretiereinrichtungen (16) übergeben und von den Arretiereinrichtungen (16) stationär im Stückgutschrank (1) gehalten werden und/oder
- bei dem einzelne Stückgutmodule (2) durch die einzelnen Movereinheiten (15) von Arretiereinrichtungen (16) des Stückgutschranks (1) übernommen und anschließend in den Stückgutschrank (1) verfahren werden.

15. Verfahren nach einem der Ansprüche 9 bis 14,
- bei dem wenigstens ein Stückgut (5) durch wenigstens einen öffenbaren Boden (25) wenigstens eines Stückgutfachs (3) in ein darunter angeordnetes Stückgutfach (3) weitergegeben wird und
- bei dem, vorzugsweise, ein Boden (25) wenigstens eines Stückgutfachs (3) zwischen einer Haltestellung zum Halten eines Stückguts (5) in eine Weitergabestellung zum Weitergeben des Stückguts (5) in das darunterliegende Stückgutfach (3) geöffnet und, insbesondere, wieder geschlossen wird.
